(19) Europäisches Patentamt
European Patent Office
Office européen des brevets

(11) **EP 2 465 349 A2**

(12) **EUROPEAN PATENT APPLICATION**

(43) Date of publication:
**20.06.2012 Bulletin 2012/25**

(51) Int Cl.:
***A01N 37/06*** (2006.01)     ***A01P 7/02*** (2006.01)

(21) Application number: **11191265.5**

(22) Date of filing: **30.11.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.12.2010 JP 2010281581**

(71) Applicant: **Shin-Etsu Chemical Co., Ltd.**
**Tokyo (JP)**

(72) Inventors:
• **Mochizuki, Fumiaki**
**Niigata, Niigata (JP)**

• **Miyake, Yuki**
**Niigata, Niigata (JP)**
• **Ishibashi, Naoki**
**Niigata, Niigata (JP)**
• **Fukumoto, Takehiko**
**Niigata, Niigata (JP)**

(74) Representative: **van Kooij, Adriaan**
**Arnold & Siedsma**
**Sweelickplein 1**
**2517 GK Den Haag (NL)**

(54) **Method for disrupting mating of Tuta absoluta**

(57) Provided is a method for disrupting mating of or controlling Tuta absoluta, a major tomato insect pest, by using a synthetic sex pheromone. Specifically, provided is a method for disrupting mating of Tuta absoluta comprising at least a step of releasing (E3, Z8, Z11)-3,8,11-tetradecatrienyl acetate into a space in which a density of the Tuta absoluta adults is 20 to 400 insects per 250 tomato plants and into which an invasion of Tuta absoluta adults from outside is prevented.

## Description

## BACKGROUND OF THE INVENTION

1. Field of the invention

The present invention relates to a method of controlling Tuta absoluta, which is a major tomato insect pest.

2. Description of the related art

Tuta absoluta is a tomato insect pest originating from South America. Since it was found for the first time in Spain in 2006, it has spread to every country in Europe and currently the damages caused by the pest have become an issue in Italy, Britain, Germany and Netherlands.

The larvae thrive inside tomato leaves or tomato fruits which are not easily exposed to a chemical liquid so that it is difficult to control them by using pesticides (Attygalle et al., Bioorg. Med. Chem., 1996, 4(3): 305-314). Further, because there is almost no natural enemy found in Europe recently attacked by the pest, damage increases without any specific measure to control. Further, the pest can also survive not only on a tomato but also on a solanaceous plant, if available. That is another reason for widening distribution thereof.

As a nocturnal insect, most moths generally use an odor substance called sex pheromone for searching a mate. Artificially synthesized sex pheromone also has a very strong attracting activity even at a very small quantity of 1/1,000,000 gram to 1/1,000,000,000 gram, while it has very little toxicity for humans and animals. Since there is almost no concern over environmental contamination by its use in an actual field, the synthetic sex pheromone has drawn an attention as a tool for clean pest control.

Sex pheromone of Tuta absoluta was found to contain (3E, 8Z, 11Z)-3,8,11-tetradecatrienyl acetate as a main component (Attygalle et al., Bioorg. Med. Chem., 1996, 4(3): 305-314). Subsequently, (3E, 8Z) -3, 8-tetradecadienyl acetate was found as the second component and it was shown that their 10 : 1 mixture has a higher attraction effect than the main component alone (Svatos et al., J. Chem. Ecol. 1996, 22(4):787-800).

As a method of controlling Tuta absoluta by using a synthetic sex pheromone, a method of attracting the moths to kill, by taking an advantage of an attraction activity of a synthetic sex pheromone, into a plot to which an insecticide or a biocontrol agent has been applied, or a so-called mating disruption method for lowering pest density in next generation by having the synthetic sex pheromone in an actual field to lower mating possibility between male and female insects, is suggested (WO 96/33612).

A mating disruption test was carried out by Filho et al. (J. Braz. Chem. Soc. 200, 11(6): 621-628). They provided five tomato fields, each having an area of 100 m$^2$. Each area was treated with (3E, 8Z, 11Z)-3,8,11-tetradecatrienyl acetate in an amount of 100 mg (which is equivalent of 10 g/ha), 200 mg (equivalent of 20 g/ha), 400 mg (equivalent of 40 g/ha), or 800 mg (equivalent of 80 g/ha), while one area was assigned to a control test without the treatment. Thereafter, fruit damage was compared among different areas. As a result, no control effect was obtained even at the area treated with the highest amount: 80 g/ha.

## SUMMARY OF THE INVENTION

WO 96/33612 does not disclose pest control data for use of a synthetic sex pheromone. Although a mating disruption test was carried out in Filho et al., J. Braz. Chem. Soc. 200, 11 (6) : 621-628, no control effect was obtained, resulting in failure of the test. The following three aspects were mentioned by them as the cause of the failed mating disruption test: (1) the mating disruption test was performed with a single component instead of a mixture of (3E, 8Z, 11Z)-3,8,11-tetradecatrienyl acetate and (3E, 8Z)-3,8-tetradecadienyl acetate, both being reported as components of the sex pheromone, (2) an insect density was already high at the beginning of the test, and (3) mated female insects migrated to the test area from the outside of the test area. Since the above result was reported, there has been no finding with respect to the pest control using the synthetic sex pheromone of (3E, 8Z, 11Z)-3,8,11-tetradecatrienyl acetate, including mating disruption. Further, the relationship between a pest density and an effect of mating disruption has never been studied.

Under such circumstances, an object of the invention is to provide a method for disrupting mating of Tuta absoluta, a major tomato insect pest, by using a synthetic sex pheromone, the method having a control effect against the pest.

To attain the object, the present inventors conducted a study to develop a mating disruption method using a synthetic sex pheromone of Tuta absoluta. As a result, it has been found as an important factor for the control effect that the synthetic sex pheromone is released into a space in which the density of the Tuta absoluta adults is maintained at 20 to 400 insects per 250 tomato plants and into which the invasion of Tuta absoluta adults from the outside is prevented. Thus, it has been found that the control effect cannot be obtained unless the invasion is prevented. The present inventors have arrived at the invention based on the finding.

According to the invention, provided is a method for disrupting mating of Tuta absoluta comprising at least the step of releasing (E3, Z8, Z11)-3,8,11-tetradecatrienyl acetate into a space into which an invasion of Tuta absoluta adults from outside is prevented and in which the density of the Tuta absoluta adults is 20 to 400 insects per 250 tomato plants.

The mating disruption method of the invention can suppress crop damages caused by Tuta absoluta as a major tomato insect pest and contribute to environmentally safe agriculture.

## DETAILED DESCRIPTION OF THE PREFERRED EMBODIMENTS

Herein below, the method for disrupting mating of Tuta absoluta in accordance with the invention is explained.

Tuta absoluta adults have small bodies as well as high mobility so that they can easily invade a house through gaps in a wall and others. Even when an insect net is installed, if a mesh size is larger than 1 mm, they can easily get through it.

The Tuta absoluta adults which have invaded a house have a negative effect on the pest control for use of synthetic pheromone in the following two cases. The first case is related to the invasion of a mated female moth from the outside. Since the synthetic sex pheromone itself has no pesticidal effect and a single female moth can lay as many as 160 to 180 eggs, it will be very difficult to lower the density of next generation larvae after the invasion of even a small number of mated females. The second case is related to the invasion of adult male moths or unmated adult female moths into a tomato green house to increase the pest density. It is generally believed that, according to a mating disruption method based on use of a synthetic sex pheromone, the control effect is reduced when the pest density is high, while the control effect is enhanced when the pest density is low. However, it is found out for the first time in the invention that such tendency is exceptionally significant in Tuta absoluta, which has never been reported before, so that it is extremely important to keep the pest density low. Thus, regardless of whether Tuta absoluta has been mated or not, once the invasion of Tuta absoluta adults is allowed, no control effect can be obtained even by the treatment of a synthetic sex pheromone.

For such reasons, the method for disrupting mating in accordance with the invention is carried out in a space which is protected against an invasion by Tuta absoluta adults. For example, the invasion of Tuta absoluta adults is blocked by a shield. Preferably, the space is surrounded by a pest net having a mesh size (a diagonal length) of 1.0 mm or less, more preferably 0.4 mm or less. The space can be an inside space of a house such as a green house. The shield is not limited to a pest net, and can be made of any material such as concrete, a plate, plastics and glass, or made of a combination of the material, as long as the shield is in the form which does not allow the invasion of pests.

Further, according to the method described above, the pest density in the space into which Tuta absoluta adults are prevented from invading from the outside is 20 to 400 insects per 250 tomato plants. When the Tuta absoluta adults are present at a density of more than 400 insects per 250 tomato plants, the mating disruption effect of the pheromone preparation is reduced so that the control effect cannot be obtained. When the density is extremely low, the damage caused by the pests will not increase even without any treatment of the pheromone preparation. A type of the tomato plant is not particularly limited if it has the Tuta absoluta adults with the density range described above. Although a fruit-bearing plant may be a major object, leaves which are the foods for the larvae can also be objects.

As the sex pheromone component for the control method of the invention, (E3, Z8, Z11) -3, 8, 11-tetradecatrienyl acetate alone, or a mixture of (E3, Z8, Z11)-3,8,11-tetradecatrienyl acetate and (E3, Z8)-3,8-tetradecadienyl acetate can be used. When the mixture is used, the weight ratio of (E3, Z8, Z11)-3,8,11-tetradecatrienyl acetate to (E3, Z8)-3,8-tetradecadienyl acetate is preferably from 100:1 to 100:60, more preferably from 100:3 to 100:20.

It should be noted that when only one component is used over several years instead of using all of sex pheromone components, there is a risk that the pest develops resistance against the pheromone preparation (see R. T. Carde (2007) "Perspectives in Ecological Theory and Integrated Pest Management", Editors: M. Kogan and P. Jepson, Cambridge University Press, 122-169). Taking such a possibility into consideration, it is preferable that a mixture of (E3, Z8, Z11)-3,8,11-tetradecatrienyl acetate and (E3, Z8)-3,8-tetradecadienyl acetate is used for the target insect, Tuta absoluta, in accordance with the invention.

(E3, Z8, Z11)-3,8,11-tetradecatrienyl acetate and (E3, Z8)-3,8-tetradecadienyl acetate, which are the sex pheromone components used for the method for disrupting mating of Tuta absoluta, can be synthesized according to the method described in the literature; Svatos et al., J. Chem. Ecol. 1996, 22 (4): 787-800.

According to the mating disruption method of the invention, the sex pheromone component may be optionally combined with an additive such as a polymerization inhibitor, an anti-oxidant and/or a UV-absorbing agent. The polymerization inhibitor may include 2,2'-methylenebis (4-methyl-6-t-butylphenol). The anti-oxidant may include butylhydroxytoluene, butylhydroxyanisole, hydroquinone and vitamin E. The UV-absorbing agent may include 2-hydroxy-4-octoxybenzophenone. Although it may vary depending on an application environment or the like, each additive may be preferably contained in an amount of 0.1 to 5.0% by weight based on the total weight of the sex pheromone components.

According to the mating disruption method of the invention, the release amount of (E3, Z8, Z11)-3,8,11-tetradecatrienyl acetate is preferably 70 to 280 mg/day/hectare in absence of (E3, Z8) -3, 8-tetradecadienyl acetate, while the release amount of the mixture of (E3, Z8, Z11)-3,8,11-tetradecatrienyl acetate and (E3, Z8)-3,8-tetradecadienyl acetate is preferably 70 to 280 mg/day/hectare in the presence of (E3, Z8)-3,8-tetradecadienyl acetate. When the release amount into a space is less than 70 mg, the mating disruption effect of the pheromone preparation may be insufficient so that the control effect may not be obtained. When the release amount is more than 280 mg, the effect may remain the same so that the pheromone component may be wasted.

A container, body or the like from which the sex pheromone component can be released into air may be in any form. The sex pheromone component may be contained by or adsorbed on a structural body made of polyethylene, polyvinyl chloride, polyvinyl acetate, Poval (a particly hydrolyzed polyvinyl acetate), polypropylene, ethylene-vinyl acetate copolymer, or a combination thereof and released as a gas from the outer surface of the structural body. The sex pheromone component may also be sprayed as mist by using a sprayer or ultrasonic vibration.

## EXAMPLES

Hereinafter, embodiments of the invention are explained based on Examples and Comparative Examples. It should not be construed that the invention is limited by them.

<Production of Pheromone Dispenser>

As a sex pheromone component, (E3, Z8, Z11)-3,8,11-tetradecatrienyl acetate alone (i.e. one component) or a mixture of 10 : 1 weight ratio of (E3, Z8, Z11)-3,8,11-tetradecatrienyl acetate to (E3, Z8)-3,8-tetradecadienyl acetate (i.e. two components) was used. Butylhydroxyltoluene as an anti-oxidant was added thereto in an amount of 2% by weight based on the total weight of the sex pheromone. The resulting mixture was added into a polyethylene capillary tube which has an inner diameter of 0.81 mm, an outer diameter of 1.41 mm, and a length of 20 cm, and then sealed. The release amount of the synthetic pheromone from a single capillary tube was 0.28 mg/day/capillary tube.

<Examples 1 to 4 and Comparative Examples 1 to 5>

Nine green houses, each having a frontage of 12 m and a depth of 69 m, were provided, and seven furrows were made from the front side to the back side in each of the green houses. Tomato seedlings were planted in each furrow at about 40 cm intervals. Each lateral side of every green house was shielded with a pest net having a mesh size of 0.4 mm to completely block any invasion of Tuta absoluta from outside.

In sixty days after planting the seedlings, 207 pheromone dispensers and 828 pheromone dispensers were wound around wires which had been evenly installed at eye level in two green houses (250 dispensers/hectare, 70 mg/day/hectare) and in four green houses (1000 dispensers/hectare, 280 mg/day/hectare), respectively, in Examples 1 to 4 and Comparative Examples 3 and 5.

On the same day, each lateral side was kept open to allow the invasion of Tuta absoluta adults for three hours with respect to two green houses in Comparative Examples 3 and 4, for six hours with respect to three green houses in Examples 1 and 3 and Comparative Example 1, for five days with respect to three green houses in Examples 2 and 4 and Comparative Example 2, and for ten days with respect to one green house in Comparative Example 5.

Once a period of time for keeping the lateral side open was over, each lateral side of each green house was shielded again with the pest net to prevent pest invasion from the outside. The tomato plants located in the middle of the green house were gently tapped with a rod during 100 m walk (corresponding to 250 tomato plants), and the number of the Tuta absoluta which flew out was counted to determine the density of the Tuta absoluta adults living in the green house.

In 30 or 60 days after placing the pheromone preparations, which is 90 days or 120 days after planting the seedlings, forty tomato plants located in the middle of the green house, which could provide the most stable effect of the pheromone preparation, were selected for examination. Then five tomato fruits in each plant (200 fruits in total) were randomly picked and examined whether or not they had been damaged by the Tuta absoluta. The damaged fruit percentage was calculated based on the following equation:

$$\{(number\ of\ damaged\ fruits)/(number\ of\ examined\ fruits)\} \times 100.$$

The results are presented in the Table 1.

**Table 1.**

| | period of time for keeping lateral side open 60 days after planting | adult pest density of Tuta absoluta | pheromone dispensers | | | damaged fruit % | |
|---|---|---|---|---|---|---|---|
| | | | number of disp. (/ha) | quantity of dispenser (mg/day/ha) | Component *1 | 90 days after planting seedlings (%) | 120 days after planting seedlings (%) |
| Example 1 | 6 hours | 31 adults/ 250 plants | 250 | 70 | One | 0.5 | 1.0 |
| Example 2 | 5 days | 377 adults/ 250 plants | 250 | 70 | One | 2.0 | 2.5 |
| Example 3 | 6 hours | 23 adults/ 250 plants | 1000 | 280 | Two | 0.5 | 0.5 |
| Example 4 | 5 days | 381 adults/ 250 plants | 1000 | 280 | Two | 2.5 | 3.0 |
| Com.Ex. 1 | 6 hours | 24 adults/ 250 plants | none | none | Two | 8.5 | 43.0 |
| Com.EX. 2 | 5 days | 366 adults/ 250 plants | none | none | Two | 33.0 | 60.5 |
| Comp.Ex. 3 | 3 hours | 3 adults/ 250 plants | 1000 | 280 | Two | 0.5 | 2.5 |
| Comp.Ex. 4 | 3 hours | 5 adults/ 250 plants | none | none | Two | 2.0 | 3.5 |
| Comp.Ex.5 | 10 days | 774 adults/ 250 plants | 1000 | 280 | Two | 20.5 | 56.0 |
| *1 In the column of "component", "one" means use of (3E, 8Z, 11Z)-3,8,11-tetradecatrienyl acetate alone and "two" means use of a mixture having a 10:1 weight ratio of (3E, 8Z, 11Z)-3,8,11-tetradecatrienyl acetate to (3E, 8Z)-3,8-tetradecadienyl acetate. | | | | | | | |

While the invasion from outside was blocked, (3E, 8Z, 11Z)-3,8,11-tetradecatrienyl acetate was released at the ratio of 70 mg/day/hectare to a space having the density of 31 adult insects per 250 plants in the green house in Example 1, or a space having the density of 377 adult insects per 250 plants in the green house in Example 2. As a result, it was possible to suppress the damaged fruit ratio to 3% or less.

Further, in the embodiment of the density of 23 insects per 250 plants in Example 3 or 381 insects per 250 plants in Example 4, it was possible to suppress the damaged fruit ratio to 3% or less by releasing the mixture having a 10 : 1 weight ratio of (3E, 8Z, 11Z)-3,8,11-tetradecatrienyl acetate to (3E, 8Z)-3,8-tetradecadienyl acetate in an amount of 280 mg/day/hectare.

However, even in the embodiments having almost the same adult density, e.g. 24 adults/250 plants in Comparative Example 1, or 366 adults/250 plants in Comparative Example 2, the invasion prevention in absence of the pheromone dispenser treatment resulted in that the damaged fruit ratio of 43.0% and 60.5%for 120 days after planting the seedlings, showing no control effect.

Further, in the embodiments having the extremely low pest density, e.g. 3 adults/250 plants in Comparative Example 3, or 5 adults/250 plants in Comparative Example 4, the damaged fruit ratio was as low as 2.5% and 3.5% for 120 days after planting the seedlings, regardless of the pheromone dispenser treatment, showing that the invasion prevention alone could bring the effective control.

Meanwhile, in the embodiment having the high pest density, e.g. 774 adults/250 plants in Comparative Example 5, the damaged fruit ratio was as high as 56.0% even after the invasion prevention and the pheromone dispenser treatment, showing that no pesticidal control was obtained at all.

**Claims**

1. A method for disrupting mating of Tuta absoluta, comprising at least a step of releasing (E3, Z8, Z11)-3,8,11-tetradecatrienyl acetate into a space in which a density of the Tuta absoluta adults is 20 to 400 insects per 250 tomato plants and into which an invasion of Tuta absoluta adults from outside is prevented.

2. The method for disrupting mating of Tuta absoluta according to claim 1, wherein (E3, Z8)-3,8-tetradecadienyl acetate is released together with the (E3, Z8, Z11)-3,8,11-tetradecatrienyl acetate.

3. The method for disrupting mating of Tuta absoluta according to claim 1 or 2, wherein a release amount of the (E3, Z8, Z11)-3,8,11-tetradecatrienyl acetate is 70 to 280 mg/day/hectare in absence of the (E3, Z8)-3,8-tetradecadienyl acetate, and a total release amount of (E3, Z8, Z11)-3,8,11-tetradecatrienyl acetate and (E3, Z8)-3,8-tetradecadienyl acetate is 70 to 280 mg/day/hectare in the presence of the (E3, Z8)-3,8-tetradecadienyl acetate.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9633612 A

### Non-patent literature cited in the description

- **ATTYGALLE et al.** *Bioorg. Med. Chem.,* 1996, vol. 4 (3), 305-314
- **SVATOS et al.** *J. Chem. Ecol.,* 1996, vol. 22 (4), 787-800
- **FILHO et al.** *J. Braz. Chem. Soc.,* 2000, vol. 11 (6), 621-628
- **R. T. CARDE.** Perspectives in Ecological Theory and Integrated Pest Management. Cambridge University Press, 2007, 122-169